# EUROPEAN PATENT APPLICATION

(11) **EP 1 094 618 A1**
(43) Date of publication of application: **25.04.2001**
(21) Application number: 99121222.6
(22) Date of filing: 23.10.1999
(51) Int. Cl.: H04B 7/005

(54) **Method of operating a mobile telephone system**

(71) Applicant: SIEMENS AKTIENGESELLSCHAFT, 80333 München (DE)
(72) Inventor: Knudsen, Knud, 9440 Abybro (DK); Moeller, Henrik Krogh, 9230 Svenstrup (DK)

(57) **Abstract**

The invention relates to a method of operating mobile telephone system and a mobile telephone operating in a burst structure. Each burst comprises a guard period (11, 12, 13) and a data period (21, 22). In the data period (21, 22) a radio signal is sent with a defined power level. In the guard periods (11, 12, 13) the power level is adjusted to the defined power level. When to consecutive bursts are used by the same station the power level remains between the defined power level of the first burst and the defined power level of the second burst.

## Description

### Prior art

The invention relates to a method of operating a mobile telephone and a mobile telephone according to the generic features of the independent patent claims.

It is already known to operate a mobile telephone system and a mobile telephone in a burst structure. In the burst structure each mobile telephone is assigned one or a plurality of bursts where it is allowed to send data. In the bursts that are not assigned to this specific mobile telephone other mobile telephones send their data. In these bursts the mobile telephone has to turn its amplifier down for not sending a signal that disturbs the other mobile telephones. To achieve this, the burst structure includes data periods and guard periods. The guard periods are used to decrease the sending power of the mobile telephones that have used the precedent data period and are also used to increase the sending power of the mobile telephones that are going to send data in the following data period. New applications of mobile telephone allow that a mobile telephone is assigned two or more consecutive bursts for sending data.

### Advantage of the invention

The invention according to the features of the independent patent claims have the advantage to enable a very easy switching from one power level to the other power level. Since the power level stays between the two defined power levels of the consecutive bursts sharp transitions of the power level value are avoided. Thereby there is very little energy radiated into other frequencies, so that the requirements of the switching spectrum can easily be met. Further the new method requires no extra hardware and can easily be implemented.

Further advantages arise from the features of the dependent patent claims. By using a smooth curve for the power level sharp transitions of the power level are avoided. This is a advantage to avoid the radiation of unwanted signals. A very easy way to generate the smooth curse consist of using a curve that is used to adjust a power level relative to power level that is used when no data are send. This signal gets corrected by adding an offset value. This also allows very easily to take into consideration any variations of the power amplifier from an ideal linear behaviour.

### Drawings

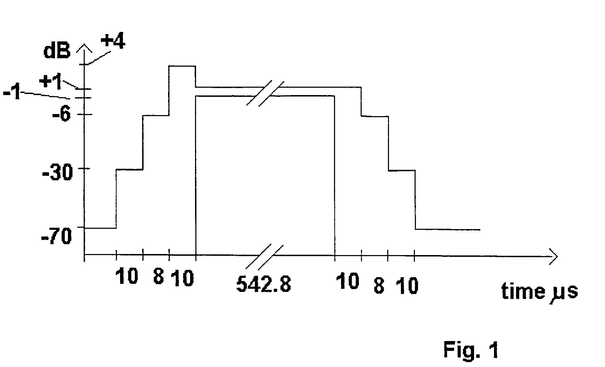

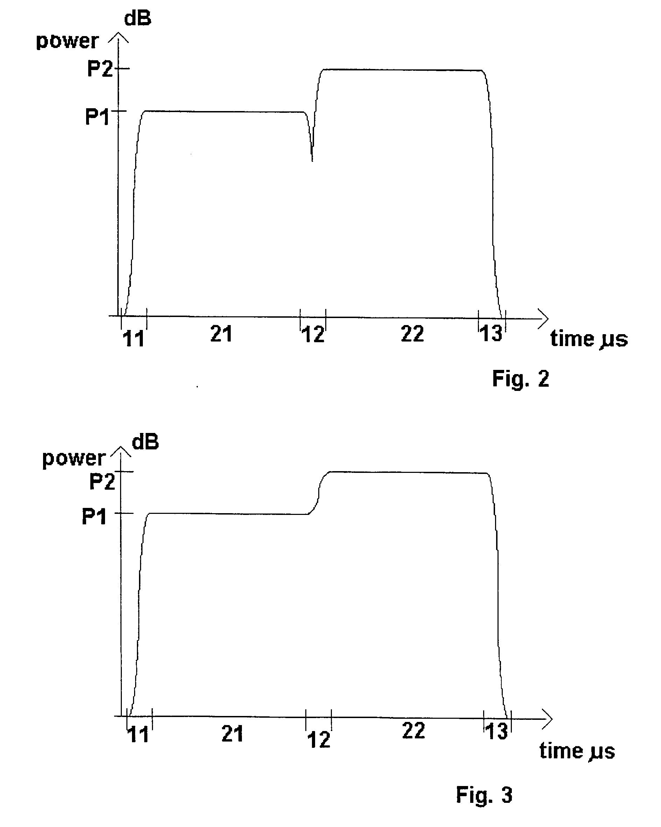

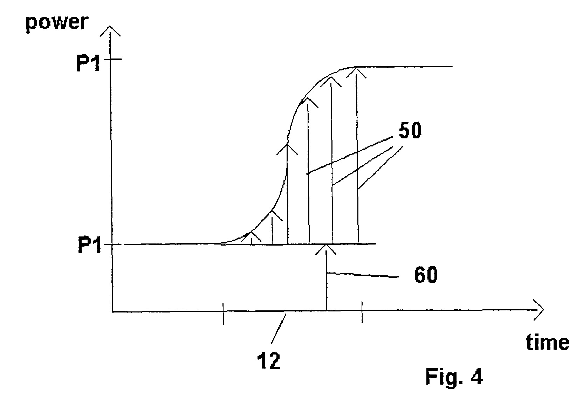

The invention is shown in the drawings and described in detail in the description. Figure 1 shows the requirements for the power level of a single burst, figure 2 shows the power level of two consecutive bursts that obey the requirements of figure 1, figure 3 shows the power level of two consecutive bursts according to the invention and figure 4 a guard periode according to the invention.

### Description

Modern mobile telephone systems, like the GSM-System, have a bursts structure that enables a plurality of mobile telephones to use a common frequency. In the GSM-System a frequency channel is divided into eight time slots and each mobile telephone is assigned one of these time slots to send a burst of data. Since the eight different mobile telephones should not interfere with each other, it has to be guaranteed that in one time slot only one mobile telephone is sending data. Therefor each burst starts with a guard period which is used by the mobile telephone that has used the preceding slot to turn its transmitter down and used by the mobile telephone that is going to use the following burst to turn its transmitter on.

Figure 1 shows the requirements for turning the transmitter on and of. The horizontal axis shows the time in microseconds and the vertical axes shows the power level in dB. In the middle of the time axes figure 1 shows a time period of 542.8 microseconds that is used for the sending of data. In this period of time, the data period, the power level or the transmitter of the mobile telephone is defined to be 0 dB. The mobile telephone is allowed to have a small variation of -1/+1 dB around the defined power level. The output power of the mobile telephone, that means the power level, has to be controlled very exactly because the signals of different mobile station vary by the distance to the base station but should reach the base station with approximately the same power level in an ideal situation. Further there are timeslots in which many mobile station send signals and other timeslots in which only few mobiles send signals. The sending power of each mobile has to be adapted to that, by increasing the sending power of each mobile when there are many mobile stations using the time slot (or something interfers on the timeslot). Therefore the base station commands every mobile station to use a specific absolute value for the defined power level during the data period of 542.8 microseconds.

In figure 1 all the different power levels are relative to the defined power level which is set to 0 dB for the purpose of figure 1. Figure 1 shows also the guard period before and after the data period. Each guard period has a length of 28 microseconds wherein these guard periods are divided in three sub periods having a length of 10, 8 and 10 microseconds. Before the start of the burst the transmitter of the mobile telephone has a power level to be less than -70 dB relative to the power level during the data period. In the first ten microseconds of the guard period the power level of the transmitter is allowed to raise by 40 dB from -70 to -30 dB. In the second period of eight microseconds of the guard period the power level is allowed to raise for another 20 dB from -30 dB to -6 dB. The last ten microseconds of the guard period are used to adjust the power level for another 6 dB from -6 to 0 dB. Within this period it is allowable that the power level exceeds the value of 0 dB by +4 dB.

After the data period of 542.8 microseconds the power level can remain for another ten microseconds on the same level, in a period between 10 and 18 microseconds it has to be lower than -6 dB and in a further period from 18 to 28 microseconds it has to be lower than -30 dB. After 28 microseconds it has to be lower than -70 dB. This down ramping guard period is used by another mobile station to increase the power level from -70 dB to the defined sending power level of that mobile.

The power level requirement as shown in figure 1 assumes that each mobile station is only assigned in one sending slot and that the power level is ramped up before the data period and ramped down after the data period. New applications of mobile telephones also allow the mobile telephones to be used for data transfer. The GSM-system supports data transfer methods known as high speed circuit switched data transfer (HSCSD) or general packet radio systems (GPRS). These methods allow that a mobile station is assigned a plurality of slots and especially that one mobile station is allowed 2 (or more) consecutive slots.

If the power level requirements as shown in figure 1 are used on a guard period between two consecutive data periods the power level time diagram will look like as shown in figure 2. Figure 2 shows on the time axes a first guard period 11 that is used increasing the power level of the transmitter of the mobile station from a very low value (-70 dB) to a first power level p1. This first power level p1 is then kept stable during the first data period 21. After the first data period 21 follows a second guard period 12 that separates the first data period 21 from a following data period 22. In this second guard period 12 the power level first drops from the level pl to a value that is below -6 dB of the power level p1 and than rises again by more than 6 dB to reach the power level of p2 that is (in the example of fig. 2) above the power level p1. This power level p2 is kept constant during the second data period 22. In the third guard period 13 the power level is than decreased from the level p2 to a value that is below -70 dB.

Of interest is the second guard period 12 that is separating as a first data period 21 and the second data period 22. As can be easily seen by applying the requirements shown in figure 1 to the situation shown in figure 2 it is very clear that there is a period of 8 microseconds in the second guard period 12 where the power level has to be lower than -6 dB of the power level p1. Since this requirement has to be kept for 8 microseconds that actual negative value will be even lower. Since this requirements has to fulfilled by real physical device, especially a power amplifier amplifying the carrier signal of the radio signal, these real physical elements have to be able to change their power level very quickly. Since the requirements are very high, it is very complicate to construct a power amplifier that fulfils this requirements. As an consequence the power amplifier will not behave ideal, especially the power amplifier will show unwanted effects, like producing signals in other frequency bands and so on. It is therefor very complicated to fulfil this requirements.

Figure 3 shows the improved situation according to the invention for two slots. The invention works as well for more than two consecutive slots. Figure 3 shows again the power level in dB with the time axes in microseconds. The guard periods 11 and 13 are the same as described to figure 2. Also the data periods 21, 22 are the same as already described with respective figure 2. The only difference is the guard period 12 that is between the first data period 21 and the second data period 22. In contrast to figure 2 the guard period 12 of figure 3 shows that the power level is changed in an smooth curve from the power level pl to the second power level p2. This violates the requirements of figure 1 but is much more easy to be implemented. In this guard period the power level remains between the power levels p1 and p2 of the first data period 21 and the second data period 22. Since there is no change from decreasing directly to increasing the power level the requirements on the power amplifier are much more reduced. The requirements are further facilitated since the change of power level in the second guard period 12 of figure 3 takes place in the form of a smooth curve that means any sudden changes in the power level are avoided.

Figure 4 shows an enlarged view of the guard period 12. Figure 4 shows the power level versus the time axes and shows the increase from power level pl to the higher power level p2. Further it is shown how the smooth curve is generated. In the transmitter there is a stored set of values that are used to generate a smooth curve. These sets of values are shown schematically in figure 4 by six arrows 50 that are stored in the transmitter. These discrete values are used for generating a smooth curve. Therefore these discrete values are given to some kind of filter device that is generating and analogue output in the form of a smooth curve. The more values are stored the easier the filter could be. In the extreme case the output values can be generated fully digital by having a large number of values stored and applying these values directly to control the power amplifier. These stored values have to be scaled, that means they have to be multiplied with some factor that is taking into account the difference between the power level p2 and p1. So the stored values are normalised and the actual needed values for generating a curve from power level p1 to power level p2 have to be generated by multiplying these normalised values by a factor that takes into account the absolute difference between power level p2 and pl. Further an offset 60 has to be added to the values that takes into account the offset between the two power levels generated by the absolute level of the power level pl. This method allows a very easy generation of the smooth curve to change the power level from level p1 to p2.

The same applies to decreasing the power level from a power level p1 to p2 if the power level p1 as higher than the power level p2.

Further this method of using discrete values for generating the smooth curve also gives the possibility to compensate nonlinearitys of the power amplifier do to the absolute power level. Therefore different sets of values have to be stored for the different absolute power levels.

## Claims

1. Method of operating a mobile telephone system, said mobile telephone system operating in a burst structure, wherein a burst comprises a guard period (11,12,13) and a data period (21,22), wherein in said data period (21,22) a radio signal is send with a defined power level, wherein in said guard period (11,12,13) the power level is increased to the defined power level or decreased from the defined power level, characterized in, that in a guard period (11,12,13) between a first and a consecutive second burst the power level remains between the defined power level of the first burst and the defined power level of the second burst.

2. Method according to claim 1, characterized in, that the power level in said guard period (11,12,13) between the first and the consecutive second burst is adjusted in a smooth curve from the defined power level of the first burst to the defined power level of the second burst.

3. Method according to claim 2, characterized in, that the smooth curve is formed
- by calculating the difference between the defined signals strength of the data period (21,22) of the first and the second burst,
- forming a curve that is used to adjust the signals strength to/from the difference from/to a power level that is used if no data are send,
- adding to the curve a offset power level that is the defined power level of the lower of the first or second power level of the first or second burst.

4. Method according to claim 3, characterized in, that the smooth curve is formed by supplying a consecutive set of values that are used to control a power amplifier, and that the set of values takes into account the absolute value of the power level of the first and second burst and a variation of the power amplifier from an ideal linear behavior at this absolut power levels.

5. Mobile telephone operating in a burst structure, wherein a burst comprises a guard period (11,12,13) and a data period (21,22), wherein in said data period (21,22) a radio signal is send with a defined power level, wherein in said guard period (11,12,13) the power level is increased to the defined power level or decreased from the defined power level, characterized in, that in a guard period (11,12,13) between a first and a consecutive second burst the power level remains between the defined power level of the first burst and the defined power level of the second burst.

6. Mobile telephone according to claim 5, characterized in, that the power level in said guard period (11,12,13) between the first and the consecutive second burst is adjusted in a smooth curve from the defined power level of the first burst to the defined power level of the second burst.

7. Mobile telephone according to claim 6, characterized in, that the smooth curve is formed
- by calculating the difference between the defined signals strength of the data period (21,22) of the first and the second burst,
- forming a curve that is used to adjust the signals strength to/from the difference from/to a power level that is used if no data are send,
- adding to the curve a offset power level that is the defined power level of the lower of the first or second power level of the first or second burst.

8. Method according to claim 7, characterized in, that the smooth curve is formed by supplying a consecutive set of values that are used to control a power amplifier, and that the set of values takes into account the absolute value of the power level of the first and second burst and a variation of the power amplifier from an ideal linear behavior at this absolut power levels.
